# EUROPÄISCHE PATENTSCHRIFT

(11) **EP 0 580 582 B1**
(45) Veröffentlichungstag und Bekanntmachung des Hinweises auf die Patenterteilung: **17.05.1995**
(21) Anmeldenummer: 92902132.7
(22) Anmeldetag: 15.01.1992
(51) Int. Cl.: F16D 65/097, F16D 65/092

(54) **BREMSBACKE MIT HALTEFEDER**
BRAKE SHOE WITH RETAINING SPRING
SEGMENT DE FREIN A RESSORT DE RETENUE

(30) Priorität: 20.04.1991 DE 4112947
(43) Veröffentlichungstag der Anmeldung: 02.02.1994
(73) Patentinhaber: ITT Automotive Europe GmbH, 60488 Frankfurt (DE)
(72) Erfinder: WEILER, Rolf, D-6239 Eppstein 2 (DE); BIERÄUGEL, Dieter, D-61194 Niddatal (DE); BACH, Uwe, D-6272 Niedernhausen-Oberjosbach (DE)
(74) Vertreter: Portwich, Peter
(86) Internationale Anmeldenummer: EP9200071
(87) Internationale Veröffentlichungsnummer: WO9218785

(56) Entgegenhaltungen:
- EP-A- 0 056 918
- EP-A- 0 341 610
- EP-A- 0 373 333
- DE-U- 9 000 489
- FR-A- 2 299 559
- US-A- 4 513 844
- US-A- 4 836 339

## Beschreibung

Die Erfindung betrifft eine Bremsbacke mit Haltefeder für eine Teilbelagscheibenbremse gemäß dem Oberbegriff des Patentanspruchs 1.

Bei einer gattungsgemäßen Teilbelagscheibenbremse wird eine Bremsbacke direkt vom Kolben einer hydraulischen Betätigungsvorrichtung betätigt. Der Kolben liegt dabei an der Rückenplatte der Bremsbacke an und drückt die Bremsbacke beim Bremsen axial gegen die Bremsscheibe. Es ist z.B. aus Dokument US-A-4 513 844 bekannt, auf der Rückenplatte der Bremsbacke eine aus Federblech geformte Haltefeder anzunieten, deren Federarme in den hohlen Kolben eingreifen und an dessen Innenwand anliegen. Mittels der Feder wird die Bremsbacke an den Kolben gefesselt, so daß sie nach der Bremsung von dem sich zurückziehenden Kolben mitgenommen und dabei ein Lüftspiel zwischen Bremsbacke und Bremsscheibe eingestellt wird.

Bekannte Haltefedern haben einen ebenen, zentralen Befestigungsabschnitt, der an der Rückenplatte der Bremsbacke anliegt und eine Öffnung zum Durchgang eines Niets aufweist. Der Befestigungsabschnitt geht seitlich in drei Federarme über, die im wesentlichen senkrecht zur Ebene des Befestigungsabschnitts abgebogen sind und von der Rückenplatte abstehen, um sich in den hohlen Bremskolben zu erstrecken. Dabei sind zwei Federarme bezüglich der Kolbenachse gegenüberliegend und der dritte im rechten Winkel dazu angeordnet.

Bekannt ist auch, die Rückenplatte der Bremsbacke mit einer Durchstellung zu versehen, so daß ein aus der Ebene der Rückenplatte hervorstehender Vorsprung gebildet wird, an dem die Haltefeder befestigt wird.

Weiterhin ist bekannt, die Rückenplatten mit einem Dämmlack zu beschichten, um Bremsgeräusche zu verhindern. Der Dämmlack wird dabei üblicherweise mittels einer über die Rückenplatte rollenden Walze aufgetragen. Dabei dürfen allerdings keine Vorsprünge aus der Ebene der Rückenplatte herausragen, die die Walze beschädigen könnten.

Aufgabe der Erfindung ist es, eine Bremsbacke zu schaffen, bei der eine Haltefeder an einer hervorstehenden Durchstellung der Rückenplatte befestigt ist und bei der die Rückenplatte mit Dämmlack beschichtet ist.

Die Lösung der Aufgabe ergibt sich aus dem kennzeichnenden Teil des Hauptanspruchs.

Die Anordnung hat den Vorteil, daß der Dämmlack in bewährter Weise mittels einer Walze aufgetragen werden kann. Die Walze muß lediglich leicht modifiziert werden, beispielsweise durch Teilung in zwei Abschnitte oder Teilwalzen, damit sie nicht über die vorstehenden Durchstellungen rollt. Dabei entsteht ein von Dämmlack freier, streifenförmiger Bereich der Rückenplatte, in dem die Durchstellungen liegen.

Um die Wirkung des Dämmlacks nur unwesentlich zu beeinträchtigen, muß der streifenförmige Bereich so schmal wie möglich sein. Dabei käme ein ebener Befestigungsabschnitt der Haltefeder wegen seiner Breite mit der Rückenplatte sowohl in dem streifenförmigen Bereich als auch in dem von Dämmlack bedeckten Bereich zur Anlage und würde daher beim Annieten je nach Dicke der Dämmlackschicht mehr oder weniger verbogen. Eine unbestimmte Verbiegung des Befestigungsabschnitts führt aber zu einer unvorhersehbaren Stellung der Federarme, so daß man sich auf deren volle Funktionsfähigkeit nicht mehr verlassen kann.

Durch den erfindungsgemäßen plateauförmigen Absatz wird die Anlage des Befestigungsabschnitts auf den dämmlackfreien Bereich der Rückenplatte eingeschränkt, wobei ein Verbiegen vermieden wird und die Funktionsfähigkeit der Federarme, insbesondere eine konstante Andruckkraft an den Bremskolben, vorteilhaft erhalten bleibt.

Wegen der erfindungsgemäß eingeschränkten Anlagefläche des Befestigungsabschnitts ist eine auf übliche Weise mit nur einer einzigen, im Querschnitt kreisförmigen Durchstellung befestigte Haltefeder nur ungenügend gegen Verdrehen gesichert. Bevorzugte Ausführungsformen gemäß einem der Ansprüche 2 bis 4 weisen diesen Mangel nicht auf und werden deshalb empfohlen.

Drei Ausführungsbeispiele der Erfindung werden nachfolgend anhand der Zeichnungen näher erläutert.

Es zeigen:
- Fig. 1: Eine Draufsicht auf eine erfindungsgemäße Bremsbacke mit Haltefeder in einer ersten Ausführungsform,
- Fig. 2: eine zweite Ausführungsform,
- Fig. 3: eine dritte Ausführungsform,

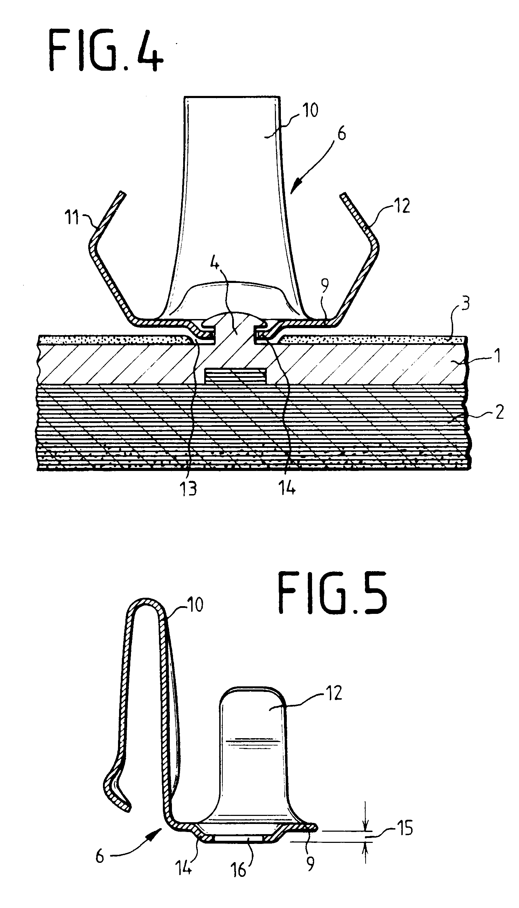

- Fig. 4: eine gemäß Linie A-A von Fig. 1 geschnittene Teilansicht der Bremsbacke mit Haltefeder,
- Fig. 5: eine gemäß Linie B-B von Fig. 1 geschnittene Teilansicht der Haltefeder.

Die dargestellten Bremsbacken weisen alle eine Rückenplatte 1 auf, deren Vorderseite mit einem Reibbelag 2 und deren Rückseite mit einem Dämmlack 3 versehen ist. Die Rückenplatte 1 weist in ihrer Mitte eine aus ihrer Ebene hervorstehende Durchstellung 4,5 auf, mittels derer eine Haltefeder 6,7,8 befestigt ist. Die Haltefedern 6,7,8 sind aus Federblech gestanzt und geformt und haben jeweils einen an der Rückenplatte 1 anliegenden Befestigungsabschnitt 9 mit einer zum Durchgang der Durchstellung 4,5 bestimmten Öffnung 16 und drei Federarme 10,11,12, die vom Befestigungsabschnitt 9 ausgehen und zum Eingriff in einen nicht gezeigten hohlen Bremskolben bestimmt sind.

Erfindungsgemäß sind die Durchstellungen 4,5 in einem von Dämmlack 3 freien, streifenförmigen Bereich 13 der Rückenplatte 1 angeordnet und der Befestigungsabschnitt 9 weist einen kreisförmig begrenzten Absatz 14 auf, der aus der Ebene des Befestigungsabschnitts 9 in Richtung Rückenplatte 1 herausragt. Die Höhe 15 des Absatzes 14 entspricht in etwa der Dicke der Dämmlackschicht 3. Die Haltefedern 6,7,8 liegen nur mit ihren Absätzen 14 im streifenförmigen Bereich 13 an der Rückenplatte 1 an.

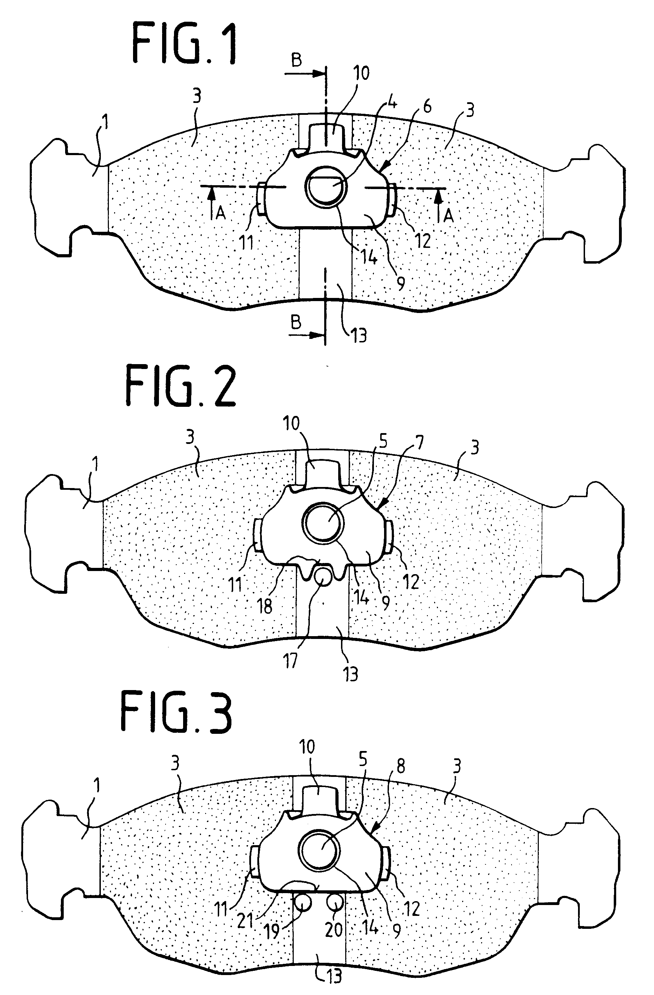

Bei dem in Fig. 1 gezeigten ersten Ausführungsbeispiel ist zu Verdrehsicherung der Haltefeder 6 die Durchstellung 4 im Profil D-förmig ausgeführt und die zugehörige Öffnung 16 im Befestigungsabschnitt 9 entsprechend angepaßt.

Bei dem in Fig. 2 gezeigten zweiten Ausführungsbeispiel weist die Rückenplatte 1 in ihrem Bereich 13 zwei hervorstehende, kreisrunde Durchstellungen 5,17 auf. An der Durchstellung 5 ist die Haltefeder 7 vernietet. Der Befestigungsabschnitt 9 ist an einem seitlich vorspringenden Bereich mit einer Ausnehmung 18 versehen, die die Durchstellung 17 seitlich umschließt, um die Haltefeder 7 gegen Verdrehen um ihren Befestigungspunkt zu sichern.

Bei dem in Fig. 3 gezeigten dritten Ausführungsbeispiel sind drei kreisrunde Durchstellungen 5,19,20 vorgesehen. Der Befestigungsabschnitt 9 hat hier einen geraden seitlichen Rand 21, an dem die zwei im Abstand zueinander angeordneten Durchstellungen 19,20 angrenzen und gegebenenfalls zur Verdrehsicherung der Haltefeder 8 anliegen.

## Patentansprüche

1. Bremsbacke für eine Teilbelagscheibenbremse, mit einer einen Reibbelag tragenden Rückenplatte (1), die mit einem Dämmlack (3) beschichtet ist, und mit einer Haltefeder (6,7,8), die an mindestens einer hervorstehenden Durchstellung (4,5,17,19,20) der Rückenplatte (1) befestigt ist, wobei die Haltefeder (6,7,8) einen an der Rückenplatte (1) anliegenden Befestigungsabschnitt (9) mit mindestens einer zum Durchgang einer Durchstellung (4,5,17,19,20) bestimmten Öffnung (16) und vom Befestigungsabschnitt (9) ausgehende Federarme (10,11,12) aufweist, die zum Eingriff in einen hohlen Bremskolben der Bremse bestimmt sind, dadurch **gekennzeichnet**, daß die Durchstellungen (4,5,17,19,20) in einem von Dämmlack (3) freien, streifenförmigen Bereich (13) der Rückenplatte (1) angeordnet sind, daß der Befestigungsabschnitt (9) der Haltefeder (6,7,8) mindestens einen plateauförmigen, seitlich vorzugsweise kreisförmig begrenzten Absatz (14) aufweist, der aus der Ebene des Befestigungsabschnitts (9) in Richtung Rückenplatte (1) herausragt, wobei die Höhe (15) des Absatzes (14) im wesentlichen gleich der Dicke der Dämmlackschicht (3) oder etwas größer ist, und daß eine zum Durchgang einer Durchstellung (4,5) bestimmte Öffnung (16) auf dem Absatz (14) angeordnet ist, wobei die verbleibende Plateaufläche des Absatzes (14) in dem von Dämmlack (3) freien Bereich (13) an der Rückenplatte (1) anliegt.

2. Bremsbacke nach Anspruch 1, dadurch **gekennzeichnet**, daß eine hervorstehende Durchstellung (4) der Rückenplatte (1) einen D förmigen Querschnitt aufweist und das die zugehörige Öffnung (16) im Befestigungsabschnitt (9) der Haltefeder (6) entsprechend D förmig angepaßt ist.

3. Bremsbacke nach Anspruch 1, dadurch **gekennzeichnet**, daß die Rückenplatte (1) zwei hervorstehende Durchstellungen (5,17) mit vorzugsweise kreisförmigem Querschnitt aufweist, daß eine der Durchstellungen (5) durch eine Öffnung des Befestigungsabschnitts (9) ragt und zur Befestigung der Haltefeder (7) vernietet ist, und daß der Befestigungsabschnitt (9) eine seitliche Ausnehmung (18) aufweist, die die andere Durchstellung (17) umschließt.

4. Bremsbacke nach Anspruch 1, dadurch **gekennzeichnet**, daß die Rückenplatte (1) drei hervorstehende Durchstellungen (5,19,20) mit vorzugsweise kreisförmigem Querschnitt aufweist, daß eine der Durchstellungen (5) durch eine Öffnung des Befestigungsabschnitts (9) ragt und zur Befestigung der Haltefeder (8) vernietet ist, und daß die beiden anderen Durchstellungen (19,20) im Abstand zueinander und unmittelbar an einen seitlichen, vorzugsweise geraden Rand (21) des Befestigungsabschnitts (9) angrenzend angeordnet sind.

## Claims

1. A brake shoe for a spot-type disc brake, comprising a backplate (1) having a friction lining and coated with a silencing varnish paint (3), a retaining spring (6, 7, 8) which is fixed to at least one buttonhead tab (4, 5, 17, 19, 20) of the backplate (1), the retaining spring (6, 7, 8) including a fixing section (9) which abuts against the backplate (1) and includes at least one opening (16) for passing a buttonhead tab (4, 5, 17, 19, 20), said retaining spring including spring arms (10, 11, 12) extending from the fixing section (9) for engaging a hollow piston of the brake,
**characterized** in that the buttonhead tabs (4, 5, 17, 19, 20) are positioned in a band-shaped range (13) of the backplate (1) being free of the silencing varnish paint (3), in that the fixing section (9) of the retaining spring (6, 7, 8) is formed with at least one plateau-shaped step (14) which is preferably circularly defined laterally and which projects from the plane of the fixing section (9) in the direction of the backplate (1), the height (15) of the step (14) being substantially equal to, or somewhat larger than, the thickness of the layer of the silencing varnish paint (3), and in that an opening (16) which is intended for passing a buttonhead tab (4, 5) is positioned on the step (14), the remaining plateau surface of the step (14) being abutted against the backplate (1) in the range (13) being free of the silencing varnish paint (3).

2. A brake shoe as claimed in claim 1,
**characterized** in that a buttonhead tab (4) of the backplate (1) includes a D-shaped cross section, and in that the associated opening (16) in the fixing section (9) of the retaining spring (6) is correspondingly D-shaped.

3. A brake shoe as claimed in claim 1,
**characterized** in that the backplate (1) is furnished with two buttonhead tabs (5, 17), preferably having a circular cross section, in that one of the buttonhead tabs (5) projects through an opening in the fixing section (9) and is riveted for the fixation of the retaining spring (7), and in that the fixing section (9) is formed with a lateral recess (18) which surrounds the other buttonhead tab (17).

4. A brake shoe as claimed in claim 1,
**characterized** in that the backplate (1) includes three buttonhead tabs (5, 19, 20), preferably having a circular cross section, in that one of the buttonhead tabs (5) projects through an opening in the fixing section (9) and is riveted for the fixation of the retaining spring (8), and in that the other two buttonhead tabs (19, 20) are positioned at a distance from each other and are directly disposed next to a lateral, preferably straight edge (21) of the fixing section (9).

## Revendications

1. Plaquette de frein pour un frein à disque à garniture partielle, comportant une plaquette dorsale (1) portant une garniture de frottement, la plaquette étant revêtue d'une peinture isolante (3), et comportant un ressort de retenue (6, 7, 8) fixé sur au moins un bossage proéminent (4, 5, 17, 19, 20) de la plaque dorsale (1), le ressort de retenue (6, 7, 8) comportant une section de fixation (9) s'appuyant sur la plaque dorsale (1) et comprenant au moins une ouverture (16) destinée à permettre le passage d'un bossage (4, 5, 17, 19, 20), et des branches de ressort (10, 11, 12) partant de la section de fixation (9) et destinées à s'engager dans un piston de frein creux du frein, caractérisée en ce que les bossages (4, 5, 17, 19, 20) sont disposés dans une zone (13) de la plaque dorsale (1), présentant une forme de bande, qui est exempte de peinture isolante (3), en ce que la section de fixation (9) du ressort de retenue comporte au moins un décrochement (14) en forme de plateau, délimité latéralement de façon circulaire de préférence, qui fait saillie au-delà du plan de la section de fixation (9), en direction de la plaque dorsale (1), la hauteur (15) du décrochement (14) étant essentiellement identique à l'épaisseur de la couche de peinture isolante (3) ou étant légèrement supérieure, et en ce qu'une ouverture (16) destinée à permettre le passage d'un bossage (4, 5) est prévue dans le décrochement (14), la surface restante de plateau du décrochement (14) s'appuyant sur la zone (13) de la plaque dorsale (1) qui est exempte de peinture isolante (3).

2. Plaquette de frein selon la revendication 1, caractérisée en ce qu'un bossage proéminent (4) de la plaque dorsale (1) présente une section en forme de D, et en ce que l'ouverture associée (16) ménagée dans la section de fixation (9) du ressort de retenue (6) est configurée de façon correspondante en forme de D.

3. Plaquette de frein selon la revendication 1, caractérisée en ce que la plaque dorsale (1) comporte deux bossages proéminents (5, 17) présentant de préférence une section circulaire, en ce que l'un des bossages (5) se projette à travers une ouverture ménagée dans la section de fixation (9) et y est riveté de manière à fixer le ressort de retenue (7), et en ce que la section de fixation (9) comporte un évidement latéral (18) qui entoure l'autre bossage (17).

4. Plaquette de frein selon la revendication 1, caractérisée en ce que la plaque dorsale (1) comporte trois bossages proéminents (5, 19, 20) présentant de préférence une section circulaire, en ce que l'un des bossages (5) se projette à travers une ouverture ménagée dans la section de fixation (9) et y est riveté de manière à fixer le ressort de retenue (8), et en ce que les deux autres bossages (19, 20) sont disposés à distance l'un de l'autre et de façon immédiatement adjacente à un bord latéral (21), droit de préférence, de la section de fixation (9).
